# EUROPEAN PATENT SPECIFICATION

(11) **EP 3 640 220 B1**
(45) Date of publication and mention of the grant of the patent: **08.09.2021**
(21) Application number: 19203840.4
(22) Date of filing: 17.10.2019
(51) Int. Cl.: C03B 33/033, C03B 33/07

(54) **CUTTING MACHINE FOR A LAMINATED GLASS SHEET**
SCHNEIDMASCHINE FÜR EIN LAMINIERTES GLASBLATT
MACHINE DE DÉCOUPE DE FEUILLES DE VERRE LAMINÉ

(30) Priority: 17.10.2018 IT 201800009543
(43) Date of publication of application: 22.04.2020
(73) Proprietor: Bottero S.p.A., 12100 Cuneo (IT)
(72) Inventor: Arnaudo, Fabio, 12100 Cuneo (IT); Faccenda, Aldo, 12100 Cuneo (IT)
(74) Representative: Bergadano, Mirko

(56) References cited:
- EP-A1- 3 127 875
- EP-A2- 1 000 907

## Description

### TECHNICAL FIELD

The present invention relates to a cutting machine for cutting a laminated glass sheet, to which the following description will make explicit reference without thereby losing generality.

### BACKGROUND ART

For cutting a laminated glass sheet, i.e. comprising two side glass sheets and an intermediate layer of thermoplastic material, it is known to use cutting machines, each comprising a fixed cutting station and two support surfaces for the sheet arranged on opposite longitudinal sides of the cutting station.

The cutting station houses two fixed cutting bridges arranged facing one another and provided with respective motorised carriages movable in a fixed rectilinear cutting direction. Each carriage bears a relative incision wheel to make an incision line on the relative external glass sheet. The cutting station then houses a movable severing member for severing the glass sheet opposite to the one in contact with the support surfaces along the relative incision line.

The known machines comprise, furthermore, in a position facing each support surface, a relative movable bridge for clamping the sheet against the relative support surface.

Each bridge comprises a relative rigid crossbeam, which faces and is parallel to the relative support surface, and is coupled to a structure of the machine so as to move vertically from and towards the relative support surface under the thrust of a relative actuator.

One of the crossbeams is then coupled to the structure of the machine to move together with the relative support surface in a direction orthogonal to the cutting direction. In this way, following the severing of the side glass sheets and the forming of two pieces of sheet joined together only by the intermediate layer, it is possible to space the same two pieces of sheet from one another by an amount sufficient to let a blade, or other equivalent cutting means for the intermediate layer, pass between the same pieces of sheet.

In order to protect the sheets against scratching or chipping, each crossbeam is provided, on the side facing the relative support surface, with a row of fixed solid pads made of an elastomeric material and spaced apart from one another.

In other solutions, the row of pads is replaced by an elongated solid or tubular body which extends over the entire length of the bridge facing the cutting plane. In the patent application EP 3 127 875 A1 in the name of the same applicant, a machine is described, wherein the crossbeam is arranged in a fixed position with respect to the support surface and the tubular body is hollow and delimits a pressurizable chamber. The inflation of the tubular body generates a thrust action on the respective piece towards the relative support surface and a consequent retention of the piece on the same support surface during the spacing step of the pieces from one another.

The machine described above, although efficient and reliable for processing most of the laminated sheets, is not completely satisfactory in the processing of particular sheets and, in particular, of those laminated sheets where the intermediate layer due to its chemical composition or its thickness opposes a high resistance to stretching and therefore to the spacing of the pieces of sheet which, generally, are moved apart from one another by two to three millimetres. When the resistance of the intermediate layer to the spacing is high, with the same spacing for support tables and for the crossbeams from one another, the actual distance of the two pieces from one another tends to progressively reduce, complicating the cutting, in some cases, and making the cutting impossible, in others. Experimentally it has been found that lateral or torsional deformations of the tubular body even of a few tenths of a millimetre are sufficient to jeopardize the spacing and, therefore, the good outcome of the cut.

Experimentally, it has also been verified that increasing the pressure inside the tubular body does not produce substantial improvements, since, in some cases, the thrust causes the deflection of the crossbeam of the clamping bridge upwards and in any case does not increase the spacing action.

### DISCLOSURE OF INVENTION

The object of the present invention is to provide a cutting machine for cutting a laminated glass sheet, which constructional features allow to solve the aforementioned problem in a simple and inexpensive manner.

According to the present invention, a cutting machine is produced for cutting a laminated glass sheet, as claimed in claim 1.

### BRIEF DESCRIPTION OF THE DRAWINGS

The invention will now be described with reference to the attached figures, which illustrate a non-limiting embodiment, wherein:
Figure 1 illustrates, in a side elevation view and substantially in a block diagram, a preferred embodiment of a cutting machine for cutting a laminated glass sheet produced according to the teachings of the present invention;
Figures 2 and 3 illustrate, in section and on an enlarged scale, a detail of Figure 1 in two different functional conditions; and
Figures 4 and 5 illustrate, in section, a detail of Figures 1 to 3 in an undeformed condition and in an operating condition.

### BEST MODE FOR CARRYING OUT THE INVENTION

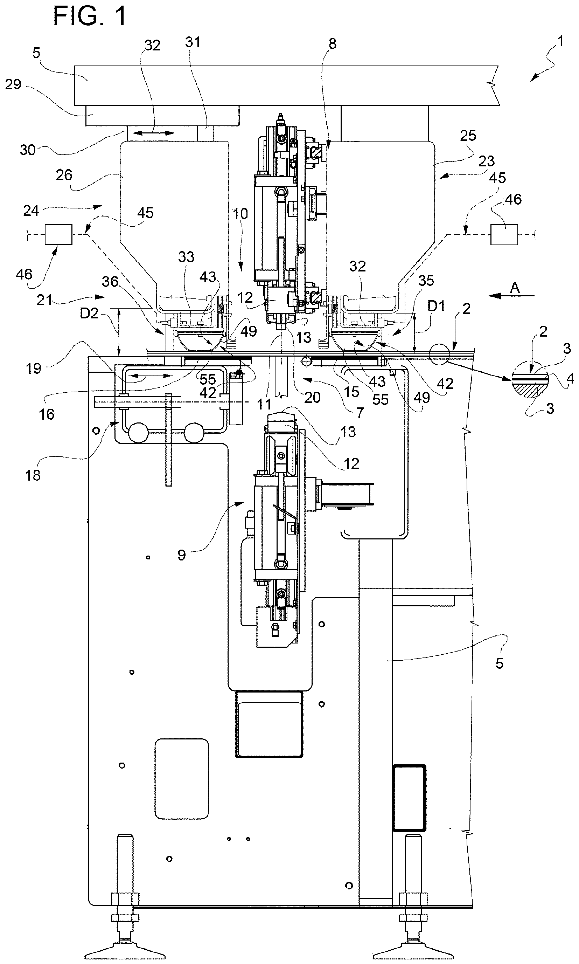

In Figure 1, number 1 denotes as a whole a cutting machine for cutting a laminated sheet 2 comprising two side glass sheets 3 and an intermediate layer 4 of thermoplastic material, generally known as PVB.

The machine 1 comprises a fixed frame 5, a sheet cutting station 7, which is also fixed and houses a cutting assembly 10 for cutting the glass sheets 3, to cut the glass sheets 3 along a rectilinear cutting line 11 and to obtain two pieces 2' of sheet joined together by the intermediate layer 4.

In the example illustrated, the cutting assembly 10 comprises a fixed upper incision bridge 8 and a fixed lower incision bridge 9, which are also known per se and therefore not described in detail. On the lower incision bridge 9 and on the upper incision bridge 8, respective carriages 12 carrying relative wheels 13 for incising the glass sheets 3 are movable, in opposite directions, in a rectilinear direction parallel to the cutting line 11. The cutting assembly 10 comprises, furthermore a severing device 20' for the incised glass sheets 3, which is per se known and schematically illustrated.

Still with reference to Figure 1, the machine 1 comprises, furthermore, two support tables 15 and 16 for supporting the sheet 2 to be cut coupled to the frame 5 in a per se known manner and arranged horizontally on opposite sides of the cutting station 7.

The tables 15 and 16 are delimited at the top by respective support surfaces for the sheet 2; the table 15 is then coupled to the frame 5 in a fixed position, while the table 16 is coupled to the frame 5 by means of a motorised movement device 18, known per se and not described in detail. The device 18 normally keeps the table 16 in a position coplanar with the table 15 and, when actuated, moves the table 16 with respect to the table 15 in opposite directions in a stretching direction 19 orthogonal to the cutting line 11.

Still with reference to Figure 1, the machine 1 finally comprises a stretching assembly 21 to space the two pieces 2' of sheet, joined together by the intermediate layer, from one another in a stretching direction parallel to the tables 15,16 and to the directions 19 and 32 and orthogonal to the cutting line 11 so as to allow the subsequent cutting of the same intermediate layer 4 and the separation of the pieces 2' from one another.

In the illustrated example, the stretching assembly 21 comprises two thrust bridges, designated with 23 and 24, for thrusting respective portions of the sheet 2 onto the support surfaces of the tables 15,16. The thrust bridges 23,24 comprise respective rigid crossbars, designated with 25 and 26, which are preferably made of box-shaped metallic material. The crossbeam 25 supports the upper incision bridge 8, extends in a position facing the table 15 and is stably connected to the frame 5 in a fixed position and at a pre-established distance D1 from the table 15 itself.

The crossbeam 26 is, instead, coupled to the frame 5 by means of a guide and slide unit 28 schematically illustrated, having a rectilinear guide 29 stably connected to the frame 5 in a fixed position. A slide 30 is coupled to the guide 29, which bears the crossbeam 26 integrally connected and moves in opposite directions under the thrust of a motorised actuator 31 in a rectilinear direction 32 parallel to the table 16 and to the direction 19.

Like the crossbeam 25, also the crossbeam 26 is kept at a fixed distance D2 from the table 16 and conveniently equal to the distance D1. According to an alternative not illustrated, at least one of the crossbeams 25, 26 is adjustable in a vertical direction relative to the relative table 15,16. In any case, both the crossbeams 25 and 26 end on the side facing the relative tables 15,16 with respective walls 32 and 33, preferably, but not necessarily, flat and parallel to the respective tables 15,16.

To the walls 32 and 33, from the side facing the tables 15 and 16, respective pressurizable thrust assemblies are coupled, designated with 35 and with 36, respectively, for pushing respective portions of the sheet 2 against the relative tables 15,16. The pressurizable thrust assemblies 35 and 36 are constructively identical to one another and form part of the stretching assembly 21.

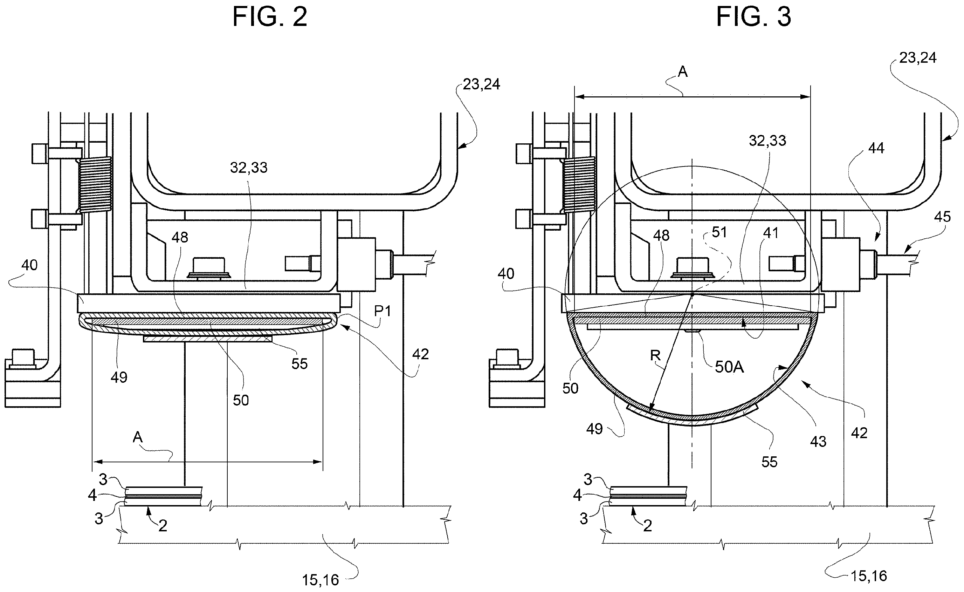

With explicit reference to Figures 2 and 3, each thrust assembly 35,36 comprises a respective support plate 40, which is stably connected to the relative wall 32,33 and is delimited by the part facing the relative table 15,16 from a respective flat surface 41 parallel to and vertically spaced from the relative table 15,16.

Each assembly 35,36 comprises, furthermore, a relative deformable and pressurizable tubular body 42; each tubular body 42 is coupled to the relative crossbeam 25,26 and extends in a direction parallel to the cutting line 11. Each tubular body 42 is conveniently made of an elastomeric material reinforced or not reinforced with meshes or reinforcing wires or is made of fabric coated, at least partially, with an elastomeric or waterproofing material and eventually reinforced.

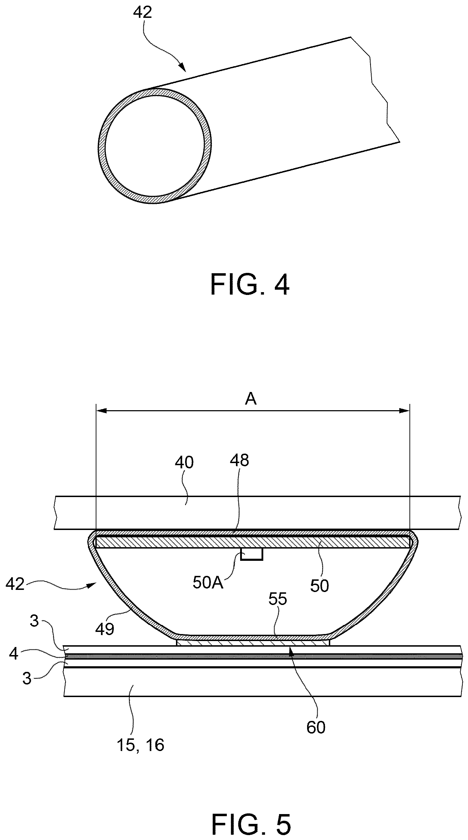

With reference to Figure 4, each tubular body 42, when arranged in an undeformed condition, i.e. when it is not coupled to the relative crossbeam 25,26, has a constant circular section along its entire length. Preferably the tubular body 42 has an outer diameter of seventy-six millimetres and an inner diameter of seventy-one millimetres.

Each tubular body 42 has opposite terminal ends closed in a fluid-tight manner in a per se known manner.

When coupled to the relative crossbeam 25, 26, each body delimits a relative air chamber 43, which extends over the entire length of the relative crossbeam 25, 26, i.e. for the entire width of the relative table 15,16 or of the corresponding support surfaces measured parallel to the incision direction 11. The air chamber 43 communicates with the outside through one or more inlet openings 44 for a pressurizing fluid, conveniently compressed air, and is watertight in the sense that it does not have outlet openings for the pressurizing fluid other than the aforementioned inlet openings 44.

Each hollow body 42 is fluidly connected to its own system 45 for feeding a pressurizing fluid comprising a relative conduit connected to the inlet/outlet openings 44 on one side, and to a pressure regulating valve assembly 46, from the other. The valve assembly 46 is adjustable to vary the pressure in the relative air chamber 43, for example according to the geometry of the sheet 2 to be cut, its thickness, the chemical-physical characteristics of the side glass sheets 3 and/or the intermediate layer 4 and/or of the arrangement of the sheet 2 along the cutting direction 11 so as to generate directly on the sheet 2 thrusts directed towards the relative table 15,16 and of variable intensity.

Regardless of how it is made, when coupled to the relative crossbeam 25,26, each tubular body 42 comprises an attachment portion 48 and a thrust portion 49 facing the relative support surface defined by the tables 15,16. The portions 48 and 49 form part of a portion made in one piece.

Each attachment portion 48 is arranged against the support surface 41 of the relative plate 40 and is forced against the relative plate 40 by an elongated pre-deformation plate 50 of the tubular body 42. Each plate 50 is arranged inside the relative tubular body 42 parallel to the tables 15 and 16, extends parallel to the cutting line 11 for the entire length of the relative air chamber 43 and, therefore, practically also for the entire length of the relative crossbeam 25,26 and of the respective tubular body 42 and forms part of the relative assembly 35,36.

Each plate 50 is connected to the relative crossbeam 25,26 by means of a plurality of screws 50A arranged conveniently in the centre of the relative plate 50.

Conveniently, each plate 50 has a width A measured orthogonally to the directions 19 and 32, i.e. orthogonally to the cutting line 11, which is wider than the outer diameter of the tubular body 42 when arranged in its undeformed condition. In general, the width A of the plates 50 exceeds the outer diameter of the undeformed tubular body 42 by a quantity greater than 10% of the aforementioned outer diameter. For example, for a tubular body having an outer diameter of seventy-six millimetres, the width A of the plate 50 must be wider than ninety-five millimetres. Under these conditions, the tubular body 42 is arranged in a pre-deformed condition and is ready to be pressurized.

When the tubular body 42 is pressurized and spaced from the sheet 2, as shown in Figure 3, the portion 48 remains flat, while the thrust portion 49 is deformed and has a section made with a plane orthogonal to the cutting line 11 shaped as a curved sector, conveniently a circular sector (Figure 3). Still when the body 42 is pressurized and spaced from the sheet 2, the thrust portion 49 has a centre of curvature 51 which is arranged above the support plate 40 or on the support plate 40 itself. According to an alternative, the centre of curvature 51 is arranged on the pre-deformation plate 50. Furthermore, when a body 42 is pressurized, each portion 49 has a maximum size which is imposed by the relative pre-deformation and attachment plate 50 and is arranged in adherence with the opposite side faces of the relative plate 50.

Still with reference to Figures 2 and 3, each tubular body 42 finally comprises an elastically deformable projection 55 facing the relative support table 15,16 and extending over the entire length of the portion 49 measured in a direction parallel to the cutting line 11. The projection 55 is stably connected to the lower portion 49, from which it protrudes downwards and avoids, when necessary, the direct contact between portion 49 and the sheet if the material forming the tubular body is incompatible with the glass sheet 3. Therefore, the projection 55 may not even be provided.

Figure 4 illustrates the body 42 in a functional or thrust condition of the sheet 2 against the relative table 15,16, i.e. when pressurized and forced against the sheet 2. In said condition, the portion 49 assumes a flexed/torsional stability configuration in the same way as that of a tyre and has a contact impression 60 with the sheet 2 having a width measured orthogonally to the direction 11 variable between ten and fifty millimetres.

In use, keeping the crossbars 25 and 26 at a fixed distance from the relative tables 15,16, the thrust upon the sheet 2 is exerted by varying the pressure of the fluid introduced into the chambers 43. Due to the substantial non-deformability of the portions 49 when pressed in contact against the sheet 2, as the pressure inside the chamber 43 increases, the relative imprint 60 remains unchanged and increases the thrust directed towards the tables 15,16.

The foregoing is essentially a consequence of the particular geometry of the tubular bodies 42 in operation and therefore of the dimensional characteristics of the pre-deformation plates 50. Said plates 50 due to the fact of extending for the entire length of the relative tubular body 42 and due to the fact of having widths A wider than the outer diameter of the undeformed tubular body 42 allow to obtain thrust bodies having high shape stability or torsional stiffness under load. Therefore, in the machine 1 described, at the end of the stretching step, the actual distance between the pieces 2' corresponds exactly to the design distance set on the machine and said distance remains unchanged so as to guarantee, over time, the repeatability of the spacing operation and therefore the correct cutting of the intermediate layer 4.

From the foregoing it is clear that modifications and alternatives can be made to the machine 1 described without thereby departing from the protective scope defined by the claims. In particular, the stretching assembly 21 could comprise only one of the thrust assemblies 35,36, as well as the cutting assembly 10 of the glass sheets 3 could be different from the one described.

## Claims

1. A cutting machine (1) for cutting a laminated glass sheet (2) comprising two side glass sheets (3) and an intermediate layer (4) of thermoplastic material, the machine comprising:
- a fixed frame (5);
- at least a table (15) (16) for supporting the glass sheets to be cut;
- cutting means (10) for cutting said side glass sheets along a cutting line (11);
- pressing means (23) for pushing said glass sheet against said support table (15);
- stretching means (18) for exerting a stretching action on said intermediate layer (4) of thermoplastic material in a stretching direction (19) orthogonal to said cutting line (11);
- said pressing means (23) comprising a horizontal crossbeam (25) parallel and raised with respect to said support table, at least a deformable tubular body (42) arranged between said support table and said crossbeam parallel to the support table and to said cutting line (11) and delimiting at least a pressurizable air chamber (43), and means for connecting said tubular body to said crossbeam;
**characterised in that** said connection means comprise a pre-deformation plate (50) for the tubular body arranged inside said tubular body (42) parallel to said support table and extending for the entire length of said tubular body (42); said pre-deformation plate (50) having a width measured orthogonally to said cutting line (11) which is wider than an outer diameter of said tubular body (42) when arranged in an undeformed condition.

2. The machine according to claim 1, **characterised in that** said width exceeds the outer diameter of the undeformed tubular body (42) by an amount greater than 10% of said outer diameter.

3. The machine according to claim 1 or 2, **characterised in that** said tubular body (42) comprises an attachment portion (48) and a thrust portion (49) of said sheet (2); said pre-deformation plate (50) pinching said attachment portion (48) against said crossbeam (25).

4. The machine according to claim 3, **characterised in that** said pre-deformation plate (50) is firmly connected to said crossbeam.

5. The machine according to claim 3 or 4, **characterised in that** said thrust portion (49) partially delimits said pressurizable air chamber (43); at least when said air chamber (43) is pressurized, said thrust portion (49) is in contact with the sides of said pre-deformation plate.

6. The machine according to one of the claims 3 to 5, **characterised in that**, when said air chamber (43) is pressurized and spaced from the glass sheet (2), said thrust portion (49) has a section orthogonal to said cutting line (11) shaped as a curved sector; the curved sector having a centre of curvature arranged on said pre-deformation plate (50) or above the pre-deformation plate.

7. The machine according to claim 6, **characterised in that**, when said air chamber (43) is pressurized and spaced from said glass sheet (2), said curved sector is a circular sector.

8. The machine according to any one of the preceding claims, **characterised in that**, when said chamber (43) is depressurized, said thrust portion (49) is placed near said pre-deformation plate (50).

9. The machine according to any one of the preceding claims, **characterised in that** said stretching means comprise a further support table (16) for sheets and further pressing means (24) for pushing said glass sheet (2) against said further support table (16); said further pressing means (24) being identical to said pressing means (23).

## Patentansprüche

1. Schneidmaschine (1) zum Schneiden einer Verbundglasscheibe (2) mit zwei seitlichen Glasscheiben (3) und einer Zwischenschicht (4) aus thermoplastischem Material, wobei die Maschine aufweist:
- einen festen Rahmen (5);
- mindestens einen Tisch (15) (16) zum Stützen der zu schneidenden Glasscheiben;
- eine Schneideinrichtung (10) zum Schneiden der seitlichen Glasscheiben entlang einer Schneidlinie (11);
- eine Andrückeinrichtung (23) zum Drücken der Glasscheibe gegen den Stütztisch (15);
- eine Dehneinrichtung (18) zum Ausüben eines Dehnvorgangs auf die Zwischenschicht (4) aus thermoplastischem Material in einer zu der Schneidlinie (11) orthogonalen Dehnrichtung (19);
- wobei die Andrückeinrichtungen (23) einen in Bezug auf den Stütztisch parallelen und höher angeordneten horizontalen Querträger (25), mindestens einen verformbaren rohrförmigen Körper (42), der zwischen dem Stütztisch und dem Querträger parallel zum Stütztisch und zu der Schneidlinie (11) angeordnet ist und mindestens eine druckbeaufschlagbare Luftkammer (43) begrenzt, und Einrichtungen zum Verbinden des rohrförmigen Körpers mit dem Querträger aufweist;
**dadurch gekennzeichnet, dass** die Verbindungseinrichtungen eine Vorverformungsplatte (50) für den rohrförmigen Körper aufweisen, welche in dem rohrförmigen Körper (42) parallel zu dem Stütztisch angeordnet ist und sich über die gesamte Länge des rohrförmigen Körpers (42) erstreckt; wobei die Vorverformungsplatte (50) eine orthogonal zur Schneidlinie (11) gemessene Breite aufweist, die breiter als ein Außendurchmesser des rohrförmigen Körpers (42) im nicht verformten Zustand ist.

2. Maschine nach Anspruch 1, **dadurch gekennzeichnet, dass** die Breite den Außendurchmesser des nicht verformten rohrförmigen Körpers (42) um einen Betrag übersteigt, der größer als 10% des Außendurchmessers ist.

3. Maschine nach Anspruch 1 oder 2, **dadurch gekennzeichnet, dass** der rohrförmige Körper (42) einen Befestigungsbereich (48) und einen Druckbereich (49) der Scheibe (2) aufweist; wobei die Vorverformungsplatte (50) den Befestigungsbereich (49) gegen den Querträger (25) klemmt.

4. Maschine nach Anspruch 3, **dadurch gekennzeichnet, dass** die Vorverformungsplatte (50) fest mit dem Querträger verbunden ist.

5. Maschine nach Anspruch 3 oder 4, **dadurch gekennzeichnet, dass** der Druckbereich (49) die druckbeaufschlagbare Luftkammer (43) teilweise begrenzt; wobei der Druckbereich (49) zumindest, wenn die Luftkammer (43) druckbeaufschlagt ist, in Kontakt mit den Seiten der Vorverformungsplatte ist.

6. Maschine nach einem der Ansprüche 3 bis 5, **dadurch gekennzeichnet, dass**, wenn die Luftkammer (43) druckbeaufschlagt ist und von der Glasscheibe (2) beabstandet ist, der Druckbereich (49) einen orthogonal zur Schneidlinie (11) verlaufenden Querschnitt in Form eines gebogenen Sektors aufweist; wobei der gebogene Sektor einen Krümmungsmittelpunkt aufweist, der auf der Vorverformungsplatte (50) oder über der Vorverformungsplatte angeordnet ist.

7. Maschine nach Anspruch 6, **dadurch gekennzeichnet, dass**, wenn die Luftkammer (43) druckbeaufschlagt ist und von der Glasscheibe (2) beabstandet ist, der gebogene Sektor ein Kreissektor ist.

8. Maschine nach einem der vorhergehenden Ansprüche, **dadurch gekennzeichnet, dass**, wenn die Kammer (43) drucklos ist, der Druckbereich (49) nahe der Vorverformungsplatte (50) angeordnet ist.

9. Maschine nach einem der vorhergehenden Ansprüche, **dadurch gekennzeichnet, dass** die Dehneinrichtungen einen weiteren Stütztisch (16) für Scheiben und weitere Andrückeinrichtungen (24) zum Drücken der Glasscheibe (2) gegen den weiteren Stütztisch (16) aufweisen; wobei die weiteren Andrückeinrichtung (24) mit der Andrückeinrichtung (23) identisch ist.

## Revendications

1. Machine de découpe (1) pour découper une feuille de verre laminé (2) comprenant deux feuilles de verre latérales (3) et une couche intermédiaire (4) de matériau thermoplastique, la machine comprenant :
- un cadre fixe (5) ;
- au moins une table (15) (16) pour supporter les feuilles de verre à découper ;
- des moyens de coupe (10) pour couper lesdites feuilles de verre latérales le long d'une ligne de coupe (11) ;
- des moyens de pression (23) pour pousser ladite feuille de verre contre ladite table de support (15) ;
- des moyens d'étirage (18) pour exercer une action d'étirement sur ladite couche intermédiaire (4) de matériau thermoplastique dans une direction d'étirage (19) orthogonale à ladite ligne de coupe (11) ;
- lesdits moyens de pression (23) comprenant une traverse horizontale (25) parallèle et surélevée par rapport à ladite table de support, au moins un corps tubulaire déformable (42) disposé entre ladite table de support et ladite traverse parallèle à la table de support et à ladite ligne de coupe (11) et délimitant au moins une chambre à air pressurisable (43), et des moyens pour connecter ledit corps tubulaire à ladite traverse ;
**caractérisée en ce que** lesdits moyens de connexion comprennent une plaque de pré-déformation (50) pour le corps tubulaire disposée à l'intérieur dudit corps tubulaire (42) parallèlement à ladite table de support et s'étendant sur toute la longueur dudit corps tubulaire (42) ; ladite plaque de pré-déformation (50) ayant une largeur mesurée orthogonalement à ladite ligne de coupe (11) qui est plus large qu'un diamètre extérieur dudit corps tubulaire (42) lorsqu'il est disposé dans un état non déformé.

2. Machine selon la revendication 1, **caractérisée en ce que** ladite largeur dépasse le diamètre extérieur du corps tubulaire non déformé (42) d'une quantité supérieure à 10 % dudit diamètre extérieur.

3. Machine selon la revendication 1 ou 2, **caractérisée en ce que** ledit corps tubulaire (42) comprend une partie de fixation (48) et une partie de poussée (49) de ladite feuille (2) ; ladite plaque de pré-déformation (50) pinçant ladite partie de fixation (48) contre ladite traverse (25).

4. Machine selon la revendication 3, **caractérisée en ce que** ladite plaque de pré-déformation (50) est fermement connectée à ladite traverse.

5. Machine selon la revendication 3 ou 4, **caractérisée en ce que** ladite partie de poussée (49) délimite partiellement ladite chambre à air pressurisable (43) ; au moins lorsque ladite chambre à air (43) est pressurisée, ladite partie de poussée (49) est en contact avec les côtés de ladite plaque de pré-déformation.

6. Machine selon l'une des revendications 3 à 5, **caractérisée en ce que**, lorsque ladite chambre à air (43) est pressurisée et espacée de la feuille de verre (2), ladite partie de poussée (49) a une section orthogonale à ladite ligne de coupe (11) en forme de secteur incurvé ; le secteur incurvé ayant un centre de courbure disposé sur ladite plaque de pré-déformation (50) ou au-dessus de la plaque de pré-déformation.

7. Machine selon la revendication 6, **caractérisée en ce que**, lorsque ladite chambre à air (43) est pressurisée et espacée de ladite feuille de verre (2), ledit secteur incurvé est un secteur circulaire.

8. Machine selon l'une quelconque des revendications précédentes, **caractérisée en ce que**, lorsque ladite chambre (43) est dépressurisée, ladite partie de poussée (49) est placée à proximité de ladite plaque de pré-déformation (50).

9. Machine selon l'une quelconque des revendications précédentes, **caractérisée en ce que** lesdits moyens d'étirage comprennent une autre table de support (16) pour les feuilles et d'autres moyens de pression (24) pour pousser ladite feuille de verre (2) contre ladite autre table de support (16); lesdits moyens de pression supplémentaires (24) étant identiques auxdits moyens de pression (23).
